# EUROPÄISCHE PATENTSCHRIFT

(11) **EP 1 040 986 B1**
(45) Veröffentlichungstag und Bekanntmachung des Hinweises auf die Patenterteilung: **23.06.2004**
(21) Anmeldenummer: 00104205.0
(22) Anmeldetag: 01.03.2000
(51) Int. Cl.: B62D 43/04, B62D 43/10

(54) **Entnahmehilfe für ein Reserverad**
Withdrawl aid for a spare tire
Aide de prélèvement d'une roue de secours

(30) Priorität: 31.03.1999 DE 19914537
(43) Veröffentlichungstag der Anmeldung: 04.10.2000
(73) Patentinhaber: Bayerische Motoren Werke Aktiengesellschaft, 80809 München (DE)
(72) Erfinder: Treis, Michael, 84435 Lengdorf (DE)

(56) Entgegenhaltungen:
- GB-A- 2 155 421
- US-A- 3 712 586

## Beschreibung

Die vorliegende Erfindung betrifft eine Entnahmehilfe für ein Reserverad eines Kraftfahrzeuges.

Aus der DE-C-40 40 950 ist eine gattungsgemäße Entnahmehilfe für ein Reserverad eines Kraftfahrzeuges bekannt. Diese bekannte Entnahmehilfe umfaßt ein Band, welches an einem Ende an einem Karosserieabschnitt, nämlich der Reserveradmulde, befestigt ist. Das Band erstreckt sich von dort unter dem Reserverad und über dieses hinaus. Das andere Ende kann unter Spannung an einem anderen Karosserieabschnitt, nämlich der Ladekante des Kofferraumes, befestigt werden. Demzufolge kann mittels des Zugbandes das Reserverad angehoben werden und nach dem Verspannen des Bandes über die von dem Band gebildete schiefe Ebene herausgezogen und/oder eingeführt werden. Dementsprechend stellt diese bekannte Entnahmehilfe zwar eine gewisse Kraftreduzierung beim Ein- und Ausbau des Reserverades bereit, es besteht jedoch ein erhebliches Risiko, daß das Reserverad seitlich von der durch das Band gebildeten schiefen Ebene heruntergleiten könnte. Insbesondere bei schweren und unhandlichen Ersatzrädern besteht somit die Möglichkeit einer Beschädigung und/oder Verschmutzung des Kofferraumes.

Es ist daher Aufgabe der vorliegenden Erfindung, eine gattungsgemäße Entnahmehilfe für ein Reserverad eines Kraftfahrzeuges in solch einer Weise weiterzubilden, daß obige Nachteile eliminiert werden. Anders ausgedrückt soll eine gattungsgemäße Entnahmehilfe für ein Reserverad in solch einer Weise weitergebildet werden, daß das Reserverad zielgenau aus der Reserveradmulde entnommen und eingelegt werden kann.

Erfindungsgemäß wird diese Aufgabe durch eine Entnahmehilfe für ein Reserverad eines Kraftfahrzeuges mit den Merkmalen des Anspruches 1 gelöst. Bevorzugte Ausführungsformen sind in den abhängigen Ansprüchen aufgeführt.

Insbesondere wird erfindungsgemäß eine Entnahmehilfe für ein Reserverad eines Kraftfahrzeuges mit zumindest einem Band angegeben, welches an einem Ende an einem Karosserieabschnitt festgelegt ist, sich von dort unter dem Reserverad und über dieses hinaus erstreckt und welches an dem anderen Ende mit einem anderen Karosserieabschnitt verspannbar ist, wobei die Entnahmehilfe durch eine Reserverad-Aufnahmeeinrichtung gekennzeichnet ist, die gleitfähig bezüglich dem Band ausgebildet ist. Dementsprechend wird erfindungsgemäß eine Art Schlitten an dem Band bereitgestellt, mittels welchem das Reserverad gleitfähig an dem Band im verspannten Zustand verschoben werden kann. Dementsprechend kann eine zielgenaue Bewegung beim Einlegen und Herausnehmen des Reserverades erfolgen. Das Risiko eines seitlichen Abgleitens des Reserverades kann durch die gleitfähig ausgebildete Reserverad-Aufnahmeeinrichtung praktisch ausgeschlossen werden.

Vorteilhafterweise ist die Reserverad-Aufnahmeeinrichtung im wesentlichen in der Form einer Halbschale ausgebildet. Diese Halbschale kann z.B. als ein Kunststoff-Spritzgußteil oder auch aus Metall gebildet sein, z.B. angepaßt auf die Geometrie der Reserveradmulde und/oder das zu stützende Reserverad.

Um eine in Verschieberichtung verbesserte Führung zu erzielen, umfaßt die Reserverad-Aufnahmeeinrichtung vorteilhafterweise zumindest eine schienenförmige Leiste.

Bei einer bevorzugten Ausführungsform umfaßt die Reserverad-Aufnahmeeinrichtung Reserverad-Fixiermittel, so daß das Reserverad mit Bezug auf die Reserverad-Aufnahmeeinrichtung festlegbar ist, z.B. indem das Reserverad mit der Reserverad-Aufnahmeeinrichtung verschraubt werden kann.

Vorteilhafterweise ist das Band an zumindest zwei Punkten an der Reserverad-Aufnahmeeinrichtung geführt. Beispielhaft kann das Band an zwei schnallenartig ausgebildeten Abschnitten bezüglich der Reserverad-Aufnahmeeinrichtung gleitfähig geführt werden. Bei einer insbesondere bevorzugten Ausführungsform wird das Band einerseits an einem radialen Abschnitt der halbschalenförmig ausgebildeten Reserverad-Aufnahmeeinrichtung geführt und andererseits an einem distalen Ende der schienenförmig ausgebildeten Leiste.

Um die Handhabung der Entnahmehilfe zu verbessern, kann dem Band ein Griff zugeordnet sein, der z.B. mit diesem vernäht ist. Durch das Bereitstellen eines Griffes kann das Reserverad einfach bei minimalem Kraftaufwand angehoben werden.

Bei einer bevorzugten Ausführungsform ist dem Band eine Verspanneinrichtung zugeordnet, die zur Wechselwirkung mit einer an dem anderen Karosserieabschnitt ausgebildeten Aussparung dient. Bei einer insbesondere bevorzugten Ausführungsform ist die Aussparung an dem anderen Karosserieabschnitt schlüssellochförmig ausgebildet, um ein einfaches In- und Außereingriffbringen des Bandes mit dem anderen Karosserieabschnitt zu gewährleisten.

Vorteilhafterweise ist der andere Karosserieabschnitt ein beweglicher Karosserieabschnitt, z.B. der untere Teil einer zweiteiligen Heckklappe, so daß die gewünschte Verspannung des Bandes durch Bewegen des beweglichen Karosserieabschnittes erzielt werden kann.

Bei einer Weiterbildung der erfindungsgemäßen Entnahmehilfe sind zumindest zwei Bänder vorgesehen. Durch das Bereitstellen von mehreren Bändern kann eine stabile und/oder breitere schiefe Ebene im verspannten Zustand gebildet werden, so daß die Möglichkeit eines Verkippens des Reserverades noch weiter reduziert werden kann.

Schließlich ist es bevorzugt, daß die Bänder im verspannten Zustand im wesentlichen parallel, insbesondere im wesentlichen in Fahrzeugrichtung verlaufen.

Weitere Vorteile und Merkmale der vorliegenden Erfindung ergeben sich aus der folgenden detaillierten Beschreibung einer derzeit bevorzugten Ausführungsform unter Bezugnahme auf die beigefügten Zeichnungen, in welchen gilt:
Fig. 1 zeigt eine Entnahmehilfe als bevorzugte Ausführungsform der Erfindung in Ausgangslage.
Fig. 2 zeigt die in Fig. 1 dargestellte Ausführungsform in einer Zwischenstellung.
Fig. 3 zeigt die in den Figuren 1 und 2 dargestellte Ausführungsform in Endlage.

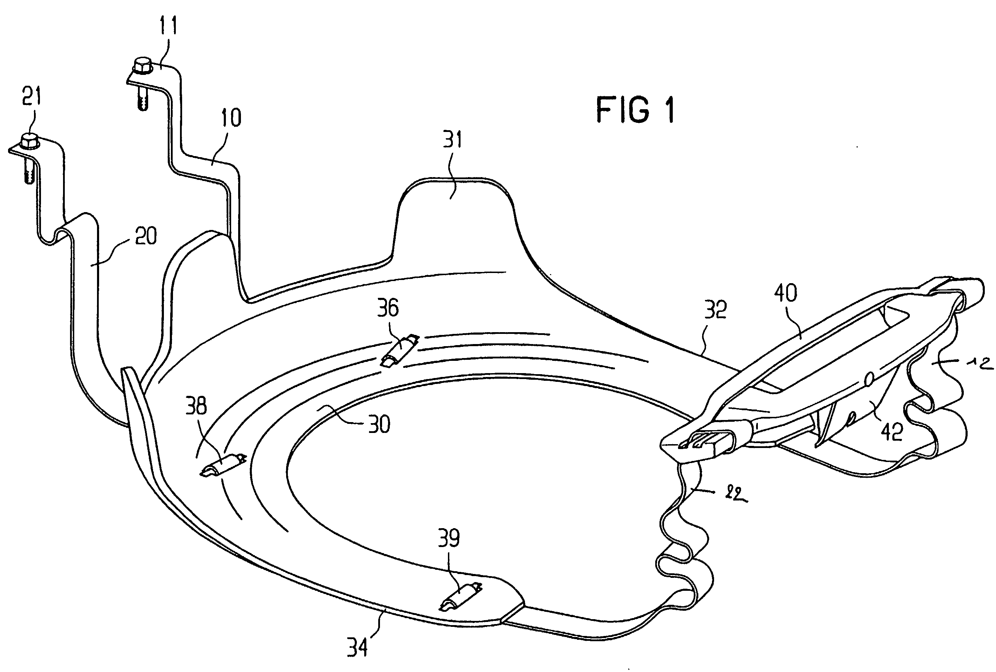

In Fig. 1 ist eine bevorzugte Ausführungsform der erfindungsgemäßen Entnahmehilfe in perspektivischer Ansicht in einer Ausgangsposition dargestellt. Die Entnahmehilfe für ein Reserverad gemäß dieser Ausführungsform umfaßt zwei Bänder 10, 20, die in der dargestellten Position lose unterhalb eines nicht dargestellten Ersatzrades verlaufen. Die beiden Bänder 10, 20 sind an einem Ende 11, 21 mit einem Karosserieabschnitt, z.B. einem Querträger, mitteles Schrauben oder anderer geeigneter Mittel befestigt. Von diesen Enden 11, 21 erstrecken sich die Bänder 10, 20 hin zu dem nicht dargestellten Ersatzrad unter diesem hindurch und über dieses hinaus. In dem Bereich, in welchem die Bänder 10, 20 unter dem Ersatzrad verlaufen, ist bei der gezeigten Ausführungsform eine Reserverad-Aufnahmeeinrichtung 30 vorgesehen, die im wesentlichen in der Form einer Halbschale das Reserverad von unten stützen kann.
Die Reserverad-Aufnahmeeinrichtung der hier dargestellten Ausführungsform ist als ein Kunststoff-Spritzgußteil ausgebildet und ist an jeweils zwei Punkten 38, 39 bzw. 36, 37 zur Wechselwirkung mit jeweils einem Band 10, 20 ausgebildet. Die an den Punkten 36, 37, 38, 39 stattfindende Wechselwirkung sollte ein Gleiten der Reserverad-Aufnahmeeinrichtung 30 entlang den Bändern 10, 20 ermöglichen. In der hier dargestellten Ausführungsform ist der an den Punkten 36, 37, 38, 39 vorgesehene Eingriff zwischen den Bändern 10, 20 und der Reserverad-Aufnahmeeinrichtung 30 ähnlich zu einer Schnalle ausgebildet, d.h. daß die Bänder 10, 20 gleitend in Ösen an den jeweiligen Punkten 36, 37, 38, 39 geführt sind.

Wie vorangehend erwähnt, ist die Reserverad-Aufnahmeeinrichtung im wesentlichen in der Form einer Halbschale ausgebildet, wobei die Reserverad-Aufnahmeeinrichtung der hier dargestellten Ausführungsform auch zwei schienenförmige Leisten 32, 34 umfaßt, so daß die jeweiligen Punkte 36, 37 bzw. 38, 39 stärker voneinander beabstandet ausgebildet sein können. Neben der Auflagefläche für das Reserverad umfaßt die Reserverad-Aufnahmeeinrichtung 30 teilweise ausgebildete Anschlagflächen 31, die zur Fixierung des Reserverades dienen.

In Fahrzeugrichtung gesehen hinter dem Reserverad sind die Gurte 10, 20 mit einem Griff 40 verbunden, mittels dem die Gurte bzw. Bänder 10, 20 gespannt werden können. Um eine karosserieseitige Verspannung zu gewährleisten, ist dem Griff 40 eine Verspanneinrichtung 42 zugeordnet, die mit einer hierfür ausgebildeten Öffnung in einem Karosserieabschnitt wechselwirken kann.

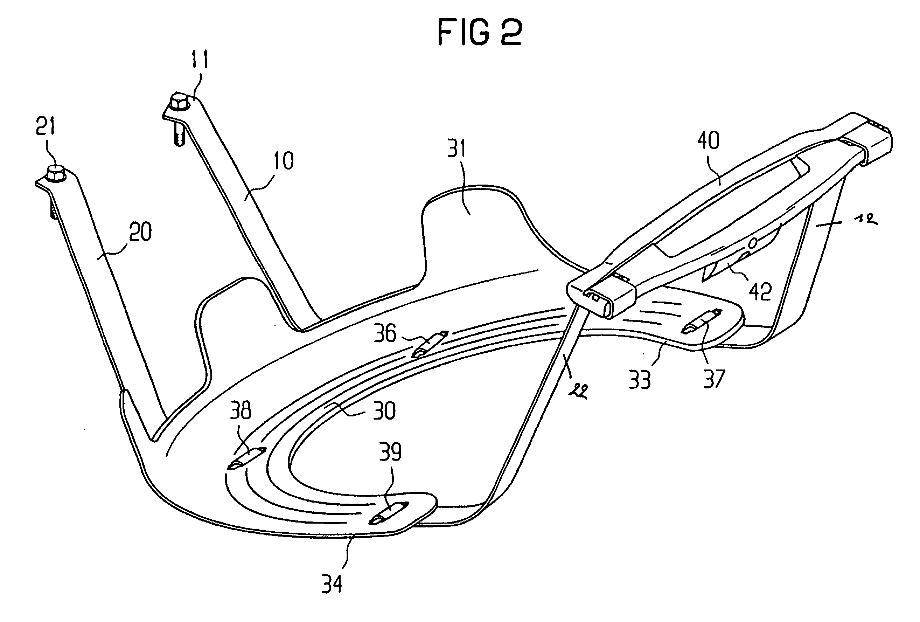

In Fig. 2 ist die in Fig. 1 dargestellte Entnahmehilfe für ein Reserverad in einer mittleren Position dargestellt, bei welcher die Bänder 10, 20 mittels des Griffes 40 leicht gespannt wurden. Durch das Spannen der Bänder 10, 20 wurde in der gezeigten Position die Reserverad-Aufnahmeeinrichtung 30 am vorderen Ende leicht angehoben. Der Fachmann wird erkennen, daß im Falle geringer Reibung an dem Punkt 36, 37, 38, 39 beim Spannen der Bänder 10, 20 die Reserverad-Aufnahmeeinrichtung 30 im wesentlichen gleichförmig angehoben wird, während es insbesondere bevorzugt ist, daß eine gewisse Reibung an den Punkten 36, 37, 38, 39 zwischen der Reserverad-Aufnahmeeinrichtung 30 und den Bändern 10, 20 vorliegt, so daß beim Beaufschlagen der Bänder 10, 20 eine Gleitbewegung erst nach erfolgtem Anheben stattfinden kann. Der Fachmann wird erkennen, daß diesbezüglich verschiedenste Einstellmöglichkeiten gegeben sind.

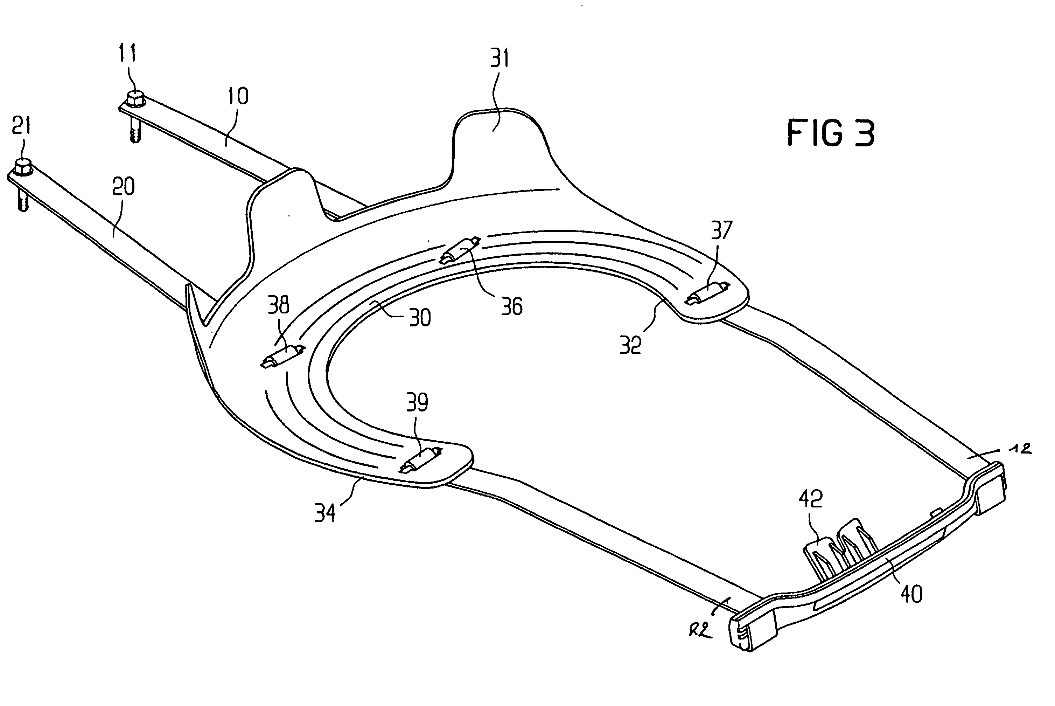

In Fig. 3 ist schließlich die in den Figuren 1 und 2 gezeigte Ausführungsform in Endlage dargestellt, wobei die Bänder 10, 20 vollständig verspannt sind und im wesentlichen in einer Ebene verlaufen. Somit bilden die Bänder 10, 20 eine schiefe Ebene, auf welcher unter Zwischenschaltung der gleitfähigen Reserverad-Aufnahmeeinrichtung 30 das Reserverad hin- und herbewegt werden kann und somit positionsgenau und unter geringem Kraftaufwand aus dem Kofferraum entnommen oder in diesen eingelegt werden kann. Nachdem die zwei Bänder 10, 20 unter gewissem Abstand zueinander vorgesehen sind und sich im wesentlichen in Fahrzeugrichtung erstrecken, besteht keine Gefahr, daß das Reserverad verkippt und von der schrägen Ebene gleiten könnte. Ferner wird durch die Fixiermittel 31, in der gezeigten Ausführungsform als einfache Anschläge ausgebildet, eine Bewegung des Reserverades bezüglich der Reserverad-Aufnahmeeinrichtung 30 gehemmt.

Unter Betrachtung des Bewegungsablaufes der Figuren 1 bis 3 wird der Fachmann erkennen, daß in der gezeigten Ausführungsform die Verspanneinrichtung 42 in solch einer Form ausgebildet ist, daß sie z.B. mit dem unteren Abschnitt einer zweiteiligen Heckklappe wechselwirken kann, so daß unter leichter Zugbeaufschlagung der Bänder 10, 20 in Fig. 2 ein Eingriff zwischen der Einrichtung 42 und der Heckklappe erzielt werden kann. Bei einem anschließenden Öffnen des unteren Teiles der Fahrzeugheckklappe wird die in Fig. 3 gezeigte Position erzielt, was beim Öffnen des unteren Teils der Heckklappe automatisch die Verspannung der Bänder und somit das Entnehmen des Reserverades ermöglicht.

Zusammenfassend läßt sich feststellen, daß mit der vorgeschlagenen Lösung ein Reserverad unter geringem Kraftaufwand und positionsgenau entnommen und eingelegt werden kann, so daß eine Beschädigung und Verschmutzung des umliegenden Kofferraums praktisch ausgeschlossen ist. Der Fachmann sollte erkennen, daß, obwohl die vorliegende Erfindung im vorangegangenen im Detail unter Bezugnahme auf eine derzeit bevorzugte Ausführungsform beschrieben wurde, verschiedenste Veränderungen und Modifikationen im Rahmen der Ansprüche möglich sind. Insbesondere sollte erwähnt werden, daß anstelle der beschriebenen zwei Bänder auch ein einzelnes, gegebenenfalls breites Band zum Einsatz kommen könnte. Des weiteren wird der Fachmann erkennen, daß zur Wechselwirkung zwischen Band und Reserverad-Aufnahmeeinrichtung verschiedenste Führungsmöglichkeiten zum Einsatz kommen können, sofern eine gleitfähige Bewegung der Reserverad-Aufnahmeeinrichtung gewährleistet ist. Schließlich wird der Fachmann erkennen, daß neben den einfachen Anschlagflächen auch andere Fixiermittel bereitgestellt sein können, um eine entsprechende Festlegung zwischen Reserverad-Aufnahmeeinrichtung und Reserverad zu erhalten.

## Patentansprüche

1. Entnahmehilfe für ein Reserverad eines Kraftfahrzeuges mit zumindest einem Band (10, 20), welches an einem Ende (11, 21) an einem Karosserieabschnitt festgelegt ist, sich von dort unter dem Reserverad und über dieses hinaus erstreckt und welches an dem anderen Ende (12, 22) mit einem anderen Karosserieabschnitt verspannbar ist, **gekennzeichnet durch** eine Reserverad-Aufnahmeeinrichtung (30), die gleitfähig bezüglich dem Band (10, 20) ausgebildet ist.

2. Entnahmehilfe nach Anspruch 1, **dadurch gekennzeichnet, daß** die Reserverad-Aufnahmeeinrichtung (30) im wesentlichen in der Form einer Halbschale ausgebildet ist.

3. Entnahmehilfe nach Anspruch 1 oder 2, **dadurch gekennzeichnet, daß** die Reserverad-Aufnahmeeinrichtung zumindest eine schienenförmige Leiste (32, 34) umfaßt.

4. Entnahmehilfe nach einem der vorangegangenen Ansprüche, **dadurch gekennzeichnet, daß** die Reserverad-Aufnahmeeinrichtung (30) Reserverad-Fixiermittel (31) umfaßt.

5. Entnahmehilfe nach einem der vorangegangenen Ansprüche, **dadurch gekennzeichnet, daß** das Band an zumindest zwei Punkten (36, 37; 38, 39) an der Reserverad-Aufnahmeeinrichtung (30) geführt ist.

6. Entnahmehilfe nach einem der vorangegangenen Ansprüche, **dadurch gekennzeichnet, daß** dem Band ein Griff (40) zugeordnet ist, welcher insbesondere mit dem Band vernäht ist.

7. Entnahmehilfe nach einem der vorangegangenen Ansprüche, **dadurch gekennzeichnet, daß** dem Band (10, 20) eine Verspanneinrichtung (42) zugeordnet ist, die zur Wechselwirkung mit einer an dem anderen Karosserieabschnitt ausgebildeten, insbesondere schlüssellochförmigen Aussparung dient.

8. Entnahmehilfe nach einem der vorangegangenen Ansprüche, **dadurch gekennzeichnet, daß** der andere Karosserieabschnitt ein beweglicher Karosserieabschnitt ist.

9. Entnahmehilfe nach einem der vorangegangenen Ansprüche, **dadurch gekennzeichnet, daß** zumindest zwei Bänder (10, 20) vorgesehen sind.

10. Entnahmehilfe nach Anspruch 9, **dadurch gekennzeichnet, daß** sich die Bänder (10, 20) im verspannten Zustand im wesentlichen parallel, insbesondere im wesentlichen in Fahrzeugrichtung erstrecken.

## Claims

1. A removal aid for a spare wheel of a motor vehicle and comprising at least one belt (10, 20) which is fastened at one end (11, 21) to a body part, extends therefrom under and over the spare wheel and can be tightened at the other end (12, 22) by another body part, **characterised by** a spare-wheel receiver (30) which is slidable relative to the belt (10, 20).

2. A removal aid according to claim 1, **characterised in that** the spare-wheel receiver (30) is substantially in the form of a half-dish.

3. A removal aid according to claim 1 or 2, **characterised in that** the spare-wheel receiver comprises at least one rail-like strip (32, 34).

4. A removal aid according to any of the preceding claims, **characterised in that** the spare-wheel receiver (30) comprises spare-wheel fixing means (31).

5. A removal aid according to any of the preceding claims, **characterised in that** the belt is guided at least two points (36, 37; 38, 39) on the spare-wheel receiver (30).

6. A removal aid according to any of the preceding claims, **characterised in that** the belt is associated with a handle (40) which more especially is sewn to the belt.

7. A removal aid according to any of the preceding claims, **characterised in that** the belt (10, 20) is associated with a tightening device (42) for interacting with a more especially keyhole-shaped recess on the other body part.

8. A removal aid according to any of the preceding claims, **characterised in that** the other body part is a movable body part.

9. A removal aid according to any of the preceding claims, **characterised in that** at least two belts (10, 20) are provided.

10. A removal aid according to claim 9, **characterised in that** the belts (10, 20) when stretched are substantially parallel and more especially extend substantially in the direction of the vehicle.

## Revendications

1. Auxiliaire de retrait pour une roue de secours d'un véhicule automobile, comportant au moins une bande (10, 20) fixée à un segment de carrosserie par une extrémité (11, 21), qui s'étend de ce point au-dessous de la roue de secours puis au-delà de celle-ci et qui peut être tendue sur un autre segment de carrosserie par l'autre extrémité (12, 22),
**caractérisé en ce qu'**
on forme une installation de réception pour roue de secours (30) susceptible de glisser par rapport à la bande (10, 20).

2. Auxiliaire de retrait selon la revendication 1,
**caractérisé en ce que**
l'installation de réception pour roue de secours (30) est conçue pratiquement sous forme d'une demi-coque.

3. Auxiliaire de retrait selon la revendication 1 ou 2,
**caractérisé en ce que**
l'installation de réception pour roue de secours comprend au moins un rebord (32, 34) en forme de rail.

4. Auxiliaire de retrait selon l'une des revendications précédentes,
**caractérisé en ce que**
l'installation de réception pour roue de secours (30) comprend des moyens de fixation (31) pour celle-ci.

5. Auxiliaire de retrait selon l'une des revendications précédentes,
**caractérisé en ce que**
la bande est guidée en au moins deux points (36, 37 ; 38, 39) sur l'installation de réception pour roue de secours (30).

6. Auxiliaire de retrait selon l'une des revendications précédentes,
**caractérisé en ce qu'**
à la bande est associée une poignée (40) cousue à la bande.

7. Auxiliaire de retrait selon l'une des revendications précédentes,
**caractérisé en ce qu'**
à la bande (10, 20) est associée une installation de tension (42) qui interagit avec un creux, en forme de trou de serrure, formé sur l'autre segment de carrosserie.

8. Auxiliaire de retrait selon l'une des revendications précédentes,
**caractérisé en ce que**
l'autre segment de carrosserie est un segment mobile de carrosserie.

9. Auxiliaire de retrait selon l'une des revendications précédentes,
**caractérisé en ce qu'**
on prévoit au moins deux bandes (10, 20).

10. Auxiliaire de retrait selon la revendication 9,
**caractérisé en ce que**
à l'état tendu, les bandes (10, 20) s'étendent pratiquement presque parallèlement, dans la direction du véhicule.
